# EUROPEAN PATENT APPLICATION

(11) **EP 0 716 047 A2**
(43) Date of publication of application: **12.06.1996**
(21) Application number: 95306543.0
(22) Date of filing: 18.09.1995
(51) Int. Cl.: C03B 37/012

(54) **Method and apparatus for producing optical fiber preform**

(30) Priority: 02.12.1994 US 352839
(71) Applicant: FIBERCORE, INC., Sturbridge, MA 01566 (US)
(72) Inventor: Aslami, Mohd A., Sturbridge, MA 01566 (US); Perry, Gregory A., Cumming, GA 30103 (US)
(74) Representative: Jones, Andrée Zena

(57) **Abstract**

A method and device for fabricating a single mode glass optical fiber preform is disclosed of the rod-in-tube type that can reduce the time for completing collapse of the barrier tube (28) by applying vacuum to an annular gap (32), formed between the barrier tube (28) and the core rod (22), during heating, and can enhance the optical properties by introducing a gas or a mixture of gases into the annular gap (32) prior to the vacuum application. The apparatus comprises a glass lathe (100) for holding and rotating the core rod/barrier tube combination (22/28), at least one heater (118) for uniformly heating the combination, and a gas and/or vacuum introducing device (206,208) to the space (32) formed between the core (22) and the barrier tube (28).

## Description

### BACKGROUND

A method of fabricating a single mode fiber preform is disclosed in U.S. patent 4,596,589 ('589 patent) issued to Gregory A. Perry, one of the inventors of the present invention, the entire disclosure of which is incorporated herein by reference. As disclosed in the '589 patent, communication optical fibers are waveguides made of transparent dielectrics whose function is to guide visible and infrared light over long distances. An optical fiber generally consists of an inner cylinder made of glass, referred to as a core, surrounded by a cylindrical shell of glass or plastic of lower refractive index, referred to as a cladding. The cladding may be made from several layers from a barrier tube or tubes and/or additional jackets. When the cladding is secured to the core rod and the cladding is a specified diameter, the combination is called a fiber optic preform.

There are three (3) significant fabrication processes currently used to manufacture fiber optic preforms which in-turn are used to manufacture optical fibers. One process is commonly known as a lateral soot deposition technique developed by Corning Glass Works, which is described in U.S. Pat. Nos. 3,711,262 and 3,876,560. In the lateral soot deposition technique, glass particulate matter and dopant halides are formed in a hydrolysis burner and deposited on a starting member such as a glass rod. Additional layers of glass, including a cladding layer, are deposited on the rod and the combination is consolidated onto a transparent rod by heating in an inert environment. Subsequent to the consolidation, the starting member may be withdrawn, leaving a hollow cylindrical glass which may be drawn into a fiber. This process is costly and time consuming in that it requires up to 200 passes to deposit the cladding and in excess of 200 passes to deposit the core and cladding glasses. In addition, after the soot is deposited, the preform must be sintered in a controlled inert atmosphere such as helium, which requires a specialized equipment, adding an additional cost. The soot deposition technique according to this process provides a preform with a hole through the center thereof when the bait rod is removed, which could cause problems in fiber drawing. Still this technique poses another disadvantage in disposing of the impurities introduced into the fiber core glass by the flame combustion products during the soot deposition. These impurities also include water of hydrolysis which must be removed using a chlorine gas drying process. All of these additional requirements require more extensive process control, increasing the production cost.

Another fabrication process is known as a modified chemical vapor deposition technique (MCVD) developed by Bell Laboratories. In this technique, glass precusor vapors are directed through a hollow glass cylinder which is heated sufficiently to start a homogeneous reaction within the glass cylinder. During this reaction, glass particulate matter is formed, deposited on the inside of the glass cylinder, and subsequently fused onto the cylinder and into a glass material by traversing the heat source. Since the starting glass is the outside layer, it may be composed of a material suitable for cladding. However, this technique also poses problems related to inefficient deposition rates and starting tube needs, which in turn increase the manufacturing cost.

Still another technique for the fabrication of fibers is called a vapor axial deposition process, or more commonly (VAD). This process, described in U.S. Pat. No. 4,062,665, involves simultaneous flame deposition of both core and cladding soots onto the end (axially) of a rotating fused-silica bait rod. As the porous soot preform grows, it is slowly drawn through a graphite resistance furnace (carbon heater) where it is consolidated into a transparent glass preform by zone-sintering. This process has all the disadvantages and problems involved with a hydrolysis burner containing dopant halides as described above in the lateral soot deposition technique, except in this case two (2) hydrolysis burners are necessary, one for the cladding material and another for the core material. The process control of the finished preform and the control of both burners must be precise. The average soot collection efficiency for the outside deposition process as described above is approximately 50%. Another problem with this technique is that the fiber core glass has a relatively high hydroxyl impurity content introduced by the flame combination products during the soot deposition.

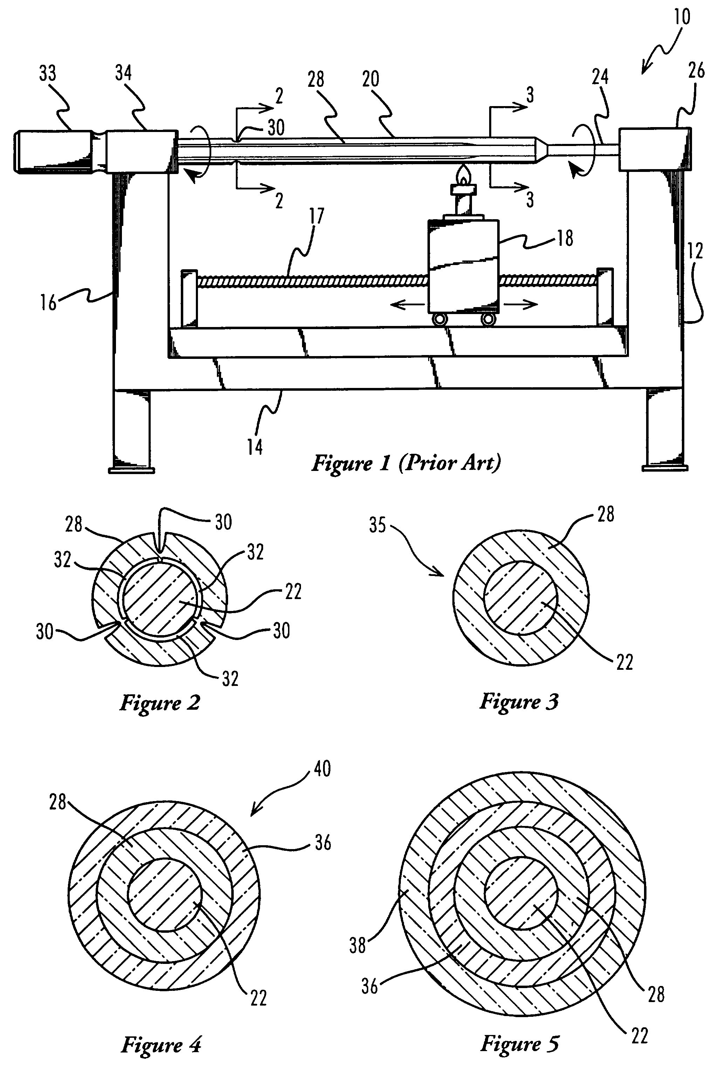

The '589 patent describes a glass lathe 10 as shown in Fig. 1, which is described hereinbelow. The glass lathe 10 comprises a standard glass lathe supports 14 having an upright tail support 12 and an upright head support 16, a tailstock 26, a headstock 34 and a movable heat source 18 connected to a traversing device 17. Specifically, the tail support 12 supports the tailstock 26 which contains a freely rotatable clamp to hold one end of a work stock 20. The head support 16 supports the headstock 34 which also has a clamp to hold the other end of the work stock. The headstock is operably connected to a rotating device 33, such as an electrical or hydraulic motor, to rotate the work stock 20. The heat source comprises an oxyhydrogen burner, although other sources of heat which will yield sustained temperatures ranging from 1,200° to 2,100° C may be used. The heat source 18 is connected to a traversing device 17 which is normally a standard screw bar mounted for rotation to the support 14. The screw bar is mounted so that its rotation causes the heat source to traverse the entire length of the work piece 20 at a velocity ranging from 1 to 18 centimeters per minute. The heat source 18 is designated to traverse in either direction for multiple passes. The temperature as well as the traversing speed is controlled in order to produce the desired temperature on the surface of the work piece.

Although the '589 patent glass lathe 10 is shown in a horizontal position, the glass fiber preform may be produced with the glass lathe 10 in the vertical position. The vertical position may be used to minimize unwanted bowing of the softened working pieces.

As described in the '589 patent, a core rod is commercially available with a specified index of refraction. The core rod is manufactured by a modified vapor axial deposition process (VAD) with an index of refraction varying between 1.460 and 1.462. One source for this modified VAD grown rod is NIPPON Telephone and Telegraph Corp. (NTT) whose VAD process is described in U.S. Pat. No. 4,062,665 to IZAWA, et al.

In order to utilize the grown core rod 22, a glass handling rod 24 is fused or welded to one end of the core rod 22 collinearly and symmetrically about the axis of the rod 22. The handling rod 24 is then placed in the tailstock 26 of the glass lathe 10 and chucked firmly in place.

As shown in Fig. 2, a barrier tube 28 having a bore slightly larger than the core 22 and index of refraction lower than the core 22 is slid thereover until the end of the barrier tube 28 is aligned with the end of the core rod 22. The barrier tube 28 is the tube that is adjacent to the core rod 22 and is the nomenclature given to the tube adjacent to the core rod 22 by those skilled in the art of making fiber optic preforms. The gap between the inside of the barrier tube 28 and the outside of the core rod 22 can vary between 0.5 and 1.0 millimeter. The barrier tube 28 which is made from Vycor® is further designated Glass Code 7913 and can be purchased from Corning Glass, Corning, N.Y. The composition of Vycor® as designated by Corning Glass is approximately 96% silica, approximately 3.5% dopants and approximately ½% impurities. The index of refraction as designated by Corning Glass is 1.458. An example of dopants that may be present as stated by Corning Glass are usually oxides such as oxides of iron or copper. Vycor® has been used for barrier tubes, but it has been found that the dopant material used in Vycor® reacts with the contaminants in the atmosphere and causes the material to lose strength. To overcome this problem, the Vycor® is buried within the preform and not subject to atmospheric contaminants.

In order to keep the barrier tube secured to the core rod 22, at least three tack welds 30 are made, as shown in Fig. 2 which weld the barrier tube 28 to the core rod 22 and leave an annular gap 32 between the core rod and the barrier tube. The gap allows the heated gas to escape as the burner 18 traverses along the work piece 20. The barrier tube 28/core rod 22 combination is chucked into the glass lathe headstock 34. The rotating device 33 normally rotates the fused barrier tube and the core rod at speeds of 85±20 revolutions per minute to uniformly distribute heat. However, the speed of the burner 18 relative to the barrier tube 28 and the core rod 22 is adjustable to collapse the barrier tube 28. The temperature at which the barrier tube 28 collapses onto the core rod 22 varies between 1,800° and 2,000°C. More than one pass of the burner may be required to insure total collapse. The temperature of the barrier tube/core rod combination is increased and the traverse speed is decreased on each subsequent pass to yield a decreasing diameter, where as the heat softens the barrier tube 28, the surface tension shrinks the barrier tube 28 onto the core rod 22. Total collapse of the barrier tube is obtained when the smallest diameter is obtained or preferably a solid cylindrical mass is observed, as shown in Fig. 3 and is defined as the first partial preform 35.

Fig. 4 shows a combination of a primary jacket 36 totally collapsed onto the first partial preform 35 to yield a second partial preform 40. The primary jacket tube is made of high purity quartz having an index of refraction of 1.459. This high purity quartz has inherent impurities of 1% or less and is commercially available in this high purity form. The bore of the high purity quartz core is slightly larger than the outside diameter of the first partial preform 35. The steps of collapsing the primary jacket 36 to the first partial preform are identical to that of collapsing the barrier tube 28 onto the core rod 22. Specifically, the primary jacket 36 is slipped over the first partial preform 35 until the end of the primary jacket aligns with the end of the first partial preform 35. The primary jacket is than tack welded onto the first partial preform 35. This combination is then rotated and heated with the burner 18 traversing the entire length of the combination. Multiple passes again may be required, with a higher temperature and a slower speed to insure total collapse thereof. Once the primary jacket 36 is heated sufficiently, the surface tension will cause the primary jacket 36 to shrink onto the first partial preform 35.

Also, if required, as shown in Fig. 5, a secondary jacket 38 of high purity quartz may be placed over the primary jacket 36 to obtain a final preform diameter. The secondary jacket 38 has an index of refraction of 1.459 and the steps of collapsing the secondary jacket 38 onto the second partial preform are identical to the above described steps. Again, these steps include placing the secondary jacket 38 over the second partial preform 40, tack welding the secondary jacket 38 onto the second partial preform 40, rotating the combination, heating the combination by traversing the burner relative to the second partial preform 40 to obtain a collapse of the secondary jacket 38 onto the second partial preform 40. Depending upon the desired diameter of the finished preform, the section shown in either Fig. 4 or 5 could represent the finished product which is an optical fiber preform for producing single mode fibers.

The optical fiber preform for producing single mode fibers must be started with a core rod 22 having a minimum diameter of three (3) millimeters and a maximum diameter of 10 millimeters. The barrier tube diameter is defined as being equal to five (5) times the diameter of the core.

Numerous equations, formula and graphs are available to use in the design of single mode fibers and single mode fiber preforms are shown in chapters 5 and 7 of the book "An Introduction to Optical Fibers" by Allen H. Cherin, published by McGraw Hill Book Co, the disclosure of which is also incorporated herein by reference. The above description outlines a method for fabricating a single mode optical fiber preform by rotating the work piece 20, varying the temperature of the burner 18, and traversing the burner 18 at varying speeds the length of the work piece 20. The work piece rotating speed, the burner temperature and the burner traversal speed can be programmed using conventional microprocessor to perform the required tasks of collapsing the barrier tube and jacket tubes to form a single mode preform.

While the apparatus and method of the '589 patent may efficiently form an optical fiber preform, there is still a need to reduce the time for completing the collapsing of the barrier tube, primary jacket tube and secondary jacket tube to better expedite the production of the optical fiber preform, and to furthermore produce an optical fiber preform with superior optical qualities.

### SUMMARY

The present invention is directed to a method and an apparatus for producing an optical fiber preform, particularly which can produce an optical fiber perform having a superior performance and which can reduce the time for completing the collapsing of the barrier tube, the primary jacket tube and any secondary jacket tube.

An apparatus for producing optical fiber preform according to the present invention comprises a glass lathe for holding and rotating a core rod/barrier tube combination or a core rod/barrier tube/primary jacket tube combination or a core rod/barrier tube/primary jacket tube/secondary jacket tube combination, and at least one heater for heating the barrier tube or primary jacket tube or secondary jacket tube, and gas and/or vacuum introducing device to the space formed between the core rod and barrier combination, or between the core rod/barrier combination and the primary jacket tube, or between the core rod/barrier/primary jacket tube combination and the secondary jacket tube combination.

The method according to the present invention comprises the steps of introducing a gas or a mixture of gasses such as helium, oxygen and chlorine into the space formed between the core rod and barrier combination, or between the core rod/barrier combination and the primary jacket tube, or between the core rod/barrier/primary jacket tube combination and the secondary jacket tube combination during the heating step to produce an optical preform with superior optical qualities.

An alternative method according to the present invention comprises the steps of introducing vacuum into the space formed between the core rod and barrier combination, or between the core rod/barrier combination and the primary jacket tube, or between the core rod/barrier/primary jacket tube combination and the secondary jacket tube combination during the heating step to accelerate the collapse of the barrier or the primary jacket tube or the secondary jacket tube.

Another alternative and most preferred method according to the present invention comprises the steps of first introducing or flushing a gas or a mixture of gasses such as helium, oxygen and chlorine into the space formed between the core rod and barrier combination, or between the core rod/barrier combination and the primary jacket tube, or between the core rod/barrier/primary jacket tube combination and the secondary jacket tube combination during the heating step to produce an optical preform with superior optical qualities, and then introducing vacuum into the space formed between the core rod and barrier combination, or between the core rod/barrier combination and the primary jacket tube, or between the core rod/barrier/primary jacket tube combination and the secondary jacket tube combination during the heating step to accelerate the collapse of the barrier or the primary jacket tube or the secondary jacket tube.

### BRIEF DESCRIPTION OF THE DRAWINGS

These and other features, aspects, and advantages of the present invention will become much more apparent from the following description, and accompanying drawings, which are illustrative of the invention.

Fig. 1 is a schematic representation of a prior art glass lathe for forming an optical fiber preform.

Fig. 2 is a cross section of the core rod and the barrier tube, showing the details of the tack welds and the gaps for the escaping gas, taken along the line 2-2 of Fig. 1.

Fig. 3 is a cross-section of a partial fiber optic preform taken along the line 3-3 of Fig. 1.

Fig. 4 is a representation of a section of a second partial fiber preform.

Fig. 5 is a representation of a section of a final fiber optic preform.

Fig. 6 is a schematic representation of an optical fiber preform forming device according to the present invention.

Fig. 7 is a schematic detailed view of the headstock in cross section showing the tube extension arrangement.

### DESCRIPTION

The work piece combination 20 described above with respect to the '589 patent is substantially identical to the work piece combination used with the present invention, the description thereof being incorporated herein by reference.

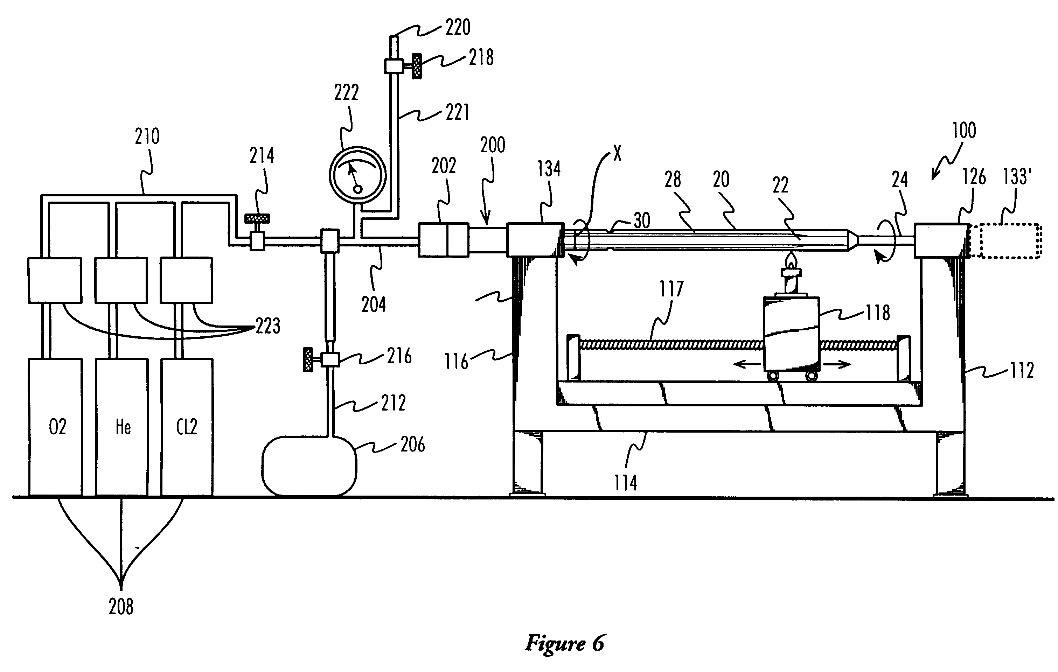

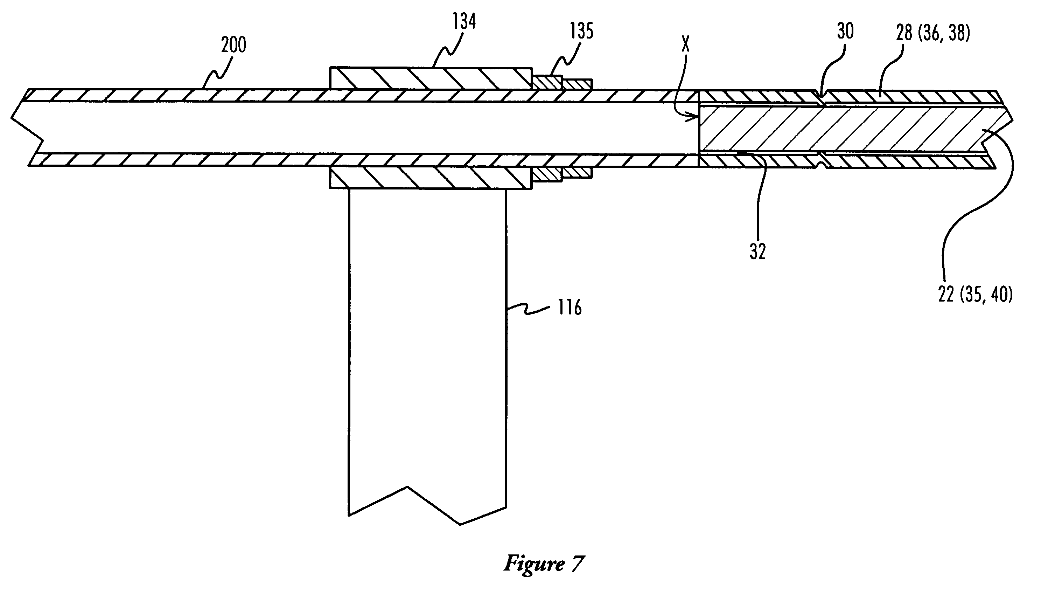

A schematic representation of one embodiment of an improved glass lathe 100 according to the present invention is shown in Fig. 6. The improved glass lathe 100 according to the present invention incorporates substantially all of the features of the '589 patent glass lathe. Alternatively, the present invention is for use with a glass lathe type disclosed in the '589 patent. Specifically, as shown in Fig. 6, the improved glass lathe 100 comprises a standard glass lathe supports 114 having an upright tail support 112 and an upright head support 116, a tailstock 126, a headstock 134 and a movable heat source 118 connected to a traversing device 117. The tail support 112 supports the tailstock 126 which contains a freely rotatable clamp or chuck to hold one end of a work stock 20. As better shown in Fig. 7, the head support 116 supports the headstock 134 which also has a conventional clamp or chuck 135 to hold the other end of the work stock. As shown in Fig. 6, the headstock is operably connected to a rotating device 133, such as an electrical or hydraulic motor, capable of rotating the work stock 20 at 20-105 rpm. Alternatively, the rotating device can be connected to the tailstock (as shown in phantom as 133') to rotate the work stock 20 from the tailstock end. The heat source comprises an oxyhydrogen burner, although other sources of heat which will yield sustained temperatures ranging from 1,200° to 2,100° C. may be used. The heat source 118 is connected to a traversing device 117 which is normally a standard screw bar mounted for rotation to the support 114. The screw bar is mounted so that its rotation causes the heat source to traverse the entire length of the work piece 20 at a velocity ranging from 1 to 30 cm/min. The heat source 118 is designated to traverse in both directions for multiple passes. The temperature as well as the traversing speed is controlled in order to produce the desired temperature on the surface of the work piece.

The optical fiber preform for producing single mode fibers in the present invention can be started with a core rod 22 having a diameter ranging from 1-10 millimeters. The barrier tube diameter can be upto seven (7) times the diameter of the core and the barrier tube 28 can be Vycor®, natural quartz, un-doped or doped synthetic silica, depending on quality of optical properties desired.

As better shown in Fig. 7, a barrier tube extension 200 preferably having the same outer diameter as the barrier tube 28 is collinearly aligned and fused to the barrier tube at point X using a conventional glass fusion process such that the gap 32 between the core rod 22 and the barrier tube 28 is not sealed or blocked. The gap between the inside of the barrier tube 28 and the outside of the core rod 22 can vary between 0.5 and 2.0 millimeter. The barrier tube extension 200 can be either fused onto the barrier tube before the core rod is inserted or fused after the core rod in slid inside the barrier tube and tack welded so as to form a gap.

The thickness of the tube extension, at least at the joining end, should be thinner or the same as the thickness of the barrier tube to prevent blockage of the annular gap. The fusion is preferably placed beyond the headstock 134 so that the clamp thereof clamps the tube extension 200 only and not any portion of the work piece. This prevents any damage to the work piece since no portion thereof is directly clamped. Moreover, when the barrier tube 28 is directly clamped, the clamping force may squeeze the barrier tube 28 and close the gap 32, preventing the gas heated by the burner 118 from escaping through the gap. By fusing the barrier tube to the extension tube and clamping the extension tube, the later problem of closing the gap can be completely eliminated.

A conventional rotary coupling 202, as shown in Fig. 6, for example made by Perry Precision Machine Co., Inc., is coupled to the extension tube and a gas/vacuum communication line 204. The rotary coupling permits the extension tube 200 to rotate along with the work piece relative to the communication line, permitting the gas/vacuum line 204 to remain stationary. The rotating device 133 is preferably placed at the headstock, but it can also be placed at the tailstock 126 should it be desired, as shown in phantom.

The gas/vacuum communication line 204 is connected to a vacuum generator or source 206 such as an electrical pump and gas supplies 208, via their respective communication lines 210, 212. A shutoff valve 214 is interposed in the line 212 for opening and closing communication between the gas supplies 208 and the work piece. Similarly, another shutoff valve 216 is interposed in the line 212 for opening and closing communication between the vacuum source. A vent line 221 having a vent 220 is connected to the communication line 204. A metering valve 218 is preferably interposed in the line 221 for adjusting the amount of the incoming gas or the vacuum in the annular gap 32. A metering gauge 222, preferably a Magnahelic gauge or U-tube, is interposed in the line 221 to measure the pressure or vacuum in the annular gap 32. A commercially available electronic flow control device 223 preferably is interposed between each of the gas supplies to control the gas output of each.

The gas supplies 208 are preferably of helium, oxygen and/or chlorine or a mixture thereof. However, other gases or combination thereof may be used such as nitrogen, argon, silicon tetrafluoride, carbon tetrachloride and other combinations of silicon chlorides and fluorides including freon.

In operation, any one or a mixture of these gases are first introduced (pressurized) into the annular gap, the space formed between the core rod and the barrier tube, prior to and during the heating step, prior to collapsing of the barrier tube, during the firepolishing step. It has been found that introducing gas such as helium, oxygen or chlorine, or a mixture thereof prior to collapsing the barrier tube improves the optical properties, e.g., by lowering optical attenuation. Without the use of vacuum, the collapse procedure requires at least four passes, with the gas flowing at a rate of about 0.4 - 2.2 cfm (about 1-25 psi above atmosphere) only on the first few purge passes. Thereafter the annular gap is exposed to the atmosphere, bringing the pressure thereof to the atmospheric pressure level. However, as the annular gap is now at the atmospheric pressure and communicates with the atmosphere, it is possible to contaminate the annular gap. Accordingly, care should be taken to prevent contamination. The heating time duration and the number of passes required for the collapse procedure would be substantially longer if vacuum is not applied in the annular gap, however. Moreover, if vacuum is not used, the starting volume (wall thickness) of the barrier tube or the jacket has to be substantially less in order for it to be completely collapsed due to the surface tension of the outer tube being not great enough to allow for complete collapse of a thicker barrier tube.

When vacuum is applied in the annular gap during the collapsing phase, the time required to complete the collapsing procedure is significantly reduced. The starting barrier tube could also be thicker, as the vacuum applied in the annular gap aids in the complete collapse thereof. Vacuum application alone can be made without first flushing with the gas. However, the quality of the optical fiber is not improved. Therefore, vacuum application preferably is applied after flushing or purging the gap with the gas. In this procedure, the vacuum can be either simultaneously applied with the gas shut down or the gas can be turned off after the vacuum has been applied. The sequence of gas shut down and vacuum application should be made to avoid atmospheric contamination thereof. The collapse procedure could be completed in a single pass according to the present invention after firepolishing with the gas, with the application of vacuum in the range of about .1 - 1 atmosphere in the annular gap. It should be noted that if the firepolishing step is not made in the presence of the gas(ses), an imperfect fusion and/or flows tends to occur between the two adjoining glass surfaces. Accordingly, it is desirable to flush with the gas(ses) during the firepolishing step. The following are Examples according to the present invention. It is to be noted, however, that the present invention is not to be limited to the Examples shown below.

### EXAMPLE 1

The apparatus shown in Fig. 6 was used for this example. The first partial preform having a length of 1.25m was prepared by sliding a barrier tube 28 made of synthetic doped fused silica over a core rod 22 formed by a modified VAD process described above. One end of the partial preform was sealed by applying heat in excess of 2000° C and fused to a glass handling rod 24 as discussed in the '589 patent and shown in Fig. 1. The other end of the barrier tube was tack welded to the core rod as shown in Fig. 2 to form an annular gap between the core rod and the barrier tube. A barrier tube extension 200 having the same outer diameter as the barrier tube was fused to the other end of the preform.

A firepolish pass was made at a temperature between 1400 and 1800° C at a traverse speed of the heat source of about 20cm/min while flushing the gap area with a mixture of He, Fl and Cl₂ at a flow rate of about 10cc/min (0.0004 cfm). A final collapse pass was performed utilizing a vacuum at about -1 atmospheric pressure at a temperature in excess of 2000° C with the traverse speed of the heat source of about 10cm/min. The entire procedure was completed in 27 minutes.

### EXAMPLE 2

Again, the apparatus shown in Fig. 6 was used for this example. The first partial preform having a length of 1.25m was prepared by sliding a barrier tube 28 made of synthetic doped fused silica over a cladded core rod 22 formed by a conventional MCVD process. One end of the partial preform was sealed by applying heat in excess of 2000° C and fused to a glass handling rod 24 as discussed in the '589 patent and shown in Fig. 1. The other end of the barrier tube was tack welded to the core rod as shown in Fig. 2 to form an annular gap between the core rod and the barrier tube. A barrier tube extension 200 having the same outer diameter as the barrier tube was fused to the other end of the preform.

A firepolish pass was made at a temperature between 1400 and 1800° C at a traverse speed of the heat source of about 20cm/min while flushing the gap area with a mixture of He, Fl and Cl₂ at a flow rate of about 10cc/min (0.0004 cfm). A final collapse pass was performed utilizing a vacuum at about -1 atmospheric pressure at a temperature in excess of 2000° C with the traverse speed of the heat source of about 10cm/min. The entire procedure was completed in 27 minutes.

### EXAMPLE 3

The first partial preform produced in Example 1 was then removed from the apparatus and the end thereof cut off to remove the barrier tube extension. A second barrier tube fused with another barrier tube extension having the same outer diameter as the second barrier tube was slid over the partial preform. The glass handling rod 24 remain attached to the partial preform. The end opposite the barrier tube extension was sealed to the partial preform adjacent where the glass handling rod is attached by applying heat in excess of 2000° C. The other end of the second barrier tube was tack welded to the first partial preform as shown in Fig. 2 to form an annular gap between the first partial preform and the second barrier tube.

Again as in Example 1, a firepolish pass was made at a temperature between 1400 and 1800° C at a traverse speed of the heat source of about 20cm/min while flushing the gap area with a mixture of He, Fl and Cl₂ at a flow rate of about 10cc/min (0.0004 cfm). A final collapse pass was performed utilizing vacuum at about -1 atmospheric pressure at a temperature in excess of 2000° C with the traverse speed of the heat source of about 5cm/min. The entire procedure was completed in 37 minutes.

The normal procedure for collapsing the partial preform according to the MVCD process disclosed in the Bell Laboratories would require at least 3 to 4 successive collapse passes. For example, pass 1 at 15cm/min over a meter preform would take 7 to 10 minutes, pass 2 at 10 cm/min would take 10 to 15 minutes, pass 3 at 5cm/min would take 20 to 25 minutes and the final collapse at 2 to 3 cm/min would take approximately 45 minutes. The cumulative time would run between 1.5 to 2 hours. The preform according to the present invention would take about 2.25 times less than that of the preform made using the conventional MCVD procedure.

While the above description is specifically directed toward collapsing of the barrier tube 28 onto the core 22, it is to be noted that the purposes of the present disclosure, the barrier tube merely refers to the outermost jacket that is being collapsed. Accordingly, the barrier tube also means the primary and secondary jackets 36, 38 as the steps of collapsing the primary jacket 36 to the first partial preform and the secondary jacket 38 to the second partial preform are identical to the steps of collapsing the barrier tube 28 onto the core rod 22, as shown in Example 3.

While the invention will be described in connection with the preferred embodiment and Examples, it will be understood that it is not intended to limit the invention to these embodiments. Given the disclosure of the present invention, one versed in the art would readily appreciate the fact that there can be other embodiments and modifications that are well within the scope and spirit of the disclosure set forth herein, but not specifically depicted and described. Accordingly, all expedient modifications readily attainable by one versed in the art from the disclosure set forth herein that are within the scope and spirit of the present invention are to be included as further embodiments of the present invention. The scope of the present invention accordingly is to be limited to as set forth in the appended claims.

## Claims

1. A method of fabricating a single mode fiber preform from a fiber work piece combination comprising an outer tube having a bore slightly larger than a cylindrical optical fiber core concentrically formed thereover, with an annular gap formed therebetween, said annular gap being maintained by a plurality of tack welds that suspend said core in said outer tube by a plurality of tack welds, said annular gap permitting gas to pass therethrough, one end of said outer tube being sealingly fused to said core, comprising the steps of:
rotating said combination;
applying heat to said combination;
introducing a gas or a mixtures of gasses into said annular gap while applying heat to said combination;
continuously heating while introducing said gas to thereby collapse said outer tube onto said core to form a preform.

2. A method of fabricating a single mode fiber preform from a fiber work piece combination comprising an outer tube having a bore slightly larger than a cylindrical optical fiber core concentrically formed thereover, with an annular gap formed therebetween, said annular gap being maintained by a plurality of tack welds that suspend said core in said outer tube by a plurality of tack welds, said annular gap permitting gas to pass therethrough, one end of said outer tube being sealingly fused to said core, comprising the steps of:
rotating said combination;
applying heat to said combination;
applying vacuum to said annular gap while applying heat along the length of said combination to thereby collapse said outer tube onto said core to form a preform, wherein said vacuum accelerates the collapse of said barrier tube.

3. A method of fabricating a single mode fiber preform from a fiber work piece combination comprising an outer tube having a bore slightly larger than a cylindrical optical fiber core concentrically formed thereover, with an annular gap formed therebetween, said annular gap being maintained by a plurality of tack welds that suspend said core in said outer tube by a plurality of tack welds, said annular gap permitting gas to pass therethrough, one end of said outer tube being sealingly fused to said core, comprising the steps of:
rotating said combination;
applying heat to said combination;
selectively introducing a gas or a mixture of gasses into said annular gap for a predetermined period while applying heat to said combination;
selectively applying vacuum to said annular gap while continuously applying heat along the length of said combination to thereby collapse said outer tube onto said core to form a preform, wherein said vacuum accelerates the time needed to collapse said outer tube.

4. A method according to claim 1, 2 or 3, further comprising the step of fusing a glass holding rod to said one end where said outer tube is fused to said core such that said glass holding rod is collinear with said core.

5. A method according to claim 4, further comprising the step of fusing a tube extension to the other end of said barrier tube such that said tube extension is collinearly aligned with said barrier tube, without closing said annular gap.

6. A method according to claim 5, wherein said rotating and heating steps comprises comprise:
clamping said glass holding rod to a rotatable clamp of a glass lathe and clamping said tube extension to another rotatable clamp of said glass lathe, one of said clamps having a rotation imparting device for rotating said combination;
rotating said combination; and
traversing a moving heat source longitudinally relative to the rotating combination to heat said combination,
wherein said heat source increases the surface tension on the outside of the barrier tube and collapse said barrier tube onto said core.

7. A method according to claim 1 or 3, wherein said gas or a mixture of gas is selected from oxygen, helium and chlorine gasses.

8. A method according to claim 5, wherein said outer tube is a barrier tube.

9. A method according to claim 5, wherein said core is a core/barrier tube combination and said outer tube is a primary jacket.

10. A method according to claim 5, wherein said core is a core/barrier tube/primary jacket combination and said outer tube is a secondary jacket.

11. An apparatus for fabricating a single mode fiber preform comprising an outer tube having a bore slightly larger than a solid cylindrical optical fiber core concentrically formed thereover, with an annular gap formed therebetween, said annular gap being maintained by a plurality of tack welds that suspend said core in said outer tube by a plurality of tack welds, said annular gap permitting gas to pass therethrough, one end of said outer tube being sealingly fused to said core, comprising:
a glass lathe having a pair of rotatably mounted clamping devices for clamping ends of said preform, a rotation imparting device connected to one of said pair of clamping devices to rotate said preform, and a heat source translatable along the length of said combination;
a gas communication line for introducing gas into said annular gap and for permitting application of vacuum to said annular gap;
a rotary coupling connected to one end of said gas communication line and to said outer tube, wherein said rotary coupling permits said work piece to rotate while maintaining said gas communication line from rotating; and
a gas supply connected to the other end of said gas communication line.

12. An apparatus according to claim 11, further comprising a shutoff valve interposed between said gas supply and said gas communication line.

13. An apparatus according to claim 12, further comprising a vacuum generator connected to said gas communication line.

14. An apparatus according to claim 13, further comprising another shutoff valve interposed between said vacuum generator and said communication line.

15. An apparatus according to claim 14, wherein said gas supply comprises at least one of oxygen, helium and chlorine gasses.

16. An apparatus according to claim 15, wherein said preform further comprises an extension tube collinearly attached to said outer tube, said extension tube being connected to one of said clamping devices and connected to said rotary coupling, wherein a gas or vacuum is introduced into said gap through said extension tube.
